# EUROPÄISCHE PATENTSCHRIFT

(11) **EP 0 587 820 B1**
(45) Veröffentlichungstag und Bekanntmachung des Hinweises auf die Patenterteilung: **13.09.1995**
(21) Anmeldenummer: 92923691.7
(22) Anmeldetag: 02.12.1992
(51) Int. Cl.: H02B 1/36, H05K 5/02

(54) **NIEDERSPANNUNGS-SCHALTANLAGE ZUR ABGABE ODER VERTEILUNG ELEKTRISCHER ENERGIE**
LOW-VOLTAGE SWITCHGEAR FOR THE OUTPUT OR DISTRIBUTION OF ELECTRIC POWER
INSTALLATION DE DISTRIBUTION BASSE TENSION VISANT A FOURNIR OU A DISTRIBUER DE L'ENERGIE ELECTRIQUE

(30) Priorität: 01.04.1992 DE 4210679
(43) Veröffentlichungstag der Anmeldung: 23.03.1994
(73) Patentinhaber: Klöckner-Moeller GmbH, 53115 Bonn (DE)
(72) Erfinder: WINKLER, Johannes, D-5303 Bornheim (DE)
(86) Internationale Anmeldenummer: DE9201002
(87) Internationale Veröffentlichungsnummer: WO9320605

(56) Entgegenhaltungen:
- EP-A- 0 311 574
- CH-A- 666 376
- DE-B- 1 271 239
- DE-B- 2 515 152
- DE-C- 4 111 403
- US-A- 4 945 450

## Beschreibung

Die Erfindung betrifft eine Niederspannungs-Schaltanlage nach dem Oberbegriff des Anspruches 1.

In der Energieverteilung sind Niederspannungs-Schaltanlagen bestehend aus in Schaltschränken befindlichen Schaltgeräten oder Gerätegruppen, auch bekannt als Motor-, Energie- oder MCC-Verteiler, zum Schutz von Anlagen und Motoren seit langem bekannt und bewährt.

Die Abgabe und Verteilung der elektrischen Energie wird mit gemeinsamen Stromsammelschienen über austauschbare Geräte oder Gerätegruppen erreicht, wobei diese Gerätegruppen Schalt- und Schutzkomponenten enthalten und mit Steckkonktaten auf die Stromsammelschienen greifen.

Die Gerätegruppen sind bei Verteilern dieser Art mindestens teilweise Steckbar, wobei mindestens der Laststromabgriff mittels auf die Stromsammelschienen greifender Steckkontakte erfolgt.
Der Laststromabgang und die Steuerstromverbindung oder dergleichen können entweder steckbar oder aber auch fest verdrahtet sein.

Die Schalt- und Schutzkomponenten können Leistungsschalter, Motorschutzschalter, Schütze und Kombinationen dieser Komponenten, wie z.B. eine Wende-, Stern-Dreieck-Kombination oder dergleichen sein.

Bekannt sind Schaltgeräte in Schaltschränken als Einfahr-Anordnungen. Diese sind oft auf Einschubschlitten angebracht oder an teleskopartig ausziehbaren Führungsschienen befestigt, wie in der DE-AS 22 54 847 gezeigt und beschrieben ist.

Die DE-AS 25 15 152 zeigt eine Schaltanlage, bei der die einzelnen Fächer durch Zwischenböden voneinander getrennt sind, wie auch noch heute in Schaltschränken üblich ist. Durch die Zwischenböden wird neben einer Schottung der Fächer eine Versteifung des Schaltschrankes bewirkt.
Die Einschübe weisen neben einer Profilschiene noch Winkelstäbe zur Stabilisierung auf. Diese Profilschiene, auf der L-förmige Ansätze angeformt sind, ist annähernd U-förmig ausgebildet, wobei durch die L-förmigen Ansätze eine Hutprofilschiene gebildet wird, um Geräte aufzuschnappen.
Die Profilschiene weist zur Führung Führungskanten auf, die in Nuten von F-förmigen Profilen greifen. Die F-förmigen Profile sind auf der Ober- und Unterseite der Zwischenböden mit dazwischenliegenden U-förmigen Profilen durch eine Schraub- oder Nietverbindung befestigt.
An dem hinteren Ende der Einschubbodenplatte ist der Kontaktapparat für die Verbindungsleitungen verschraubt.

In der DE-PS 32 43 127 ist ein Schaltschrank gezeigt und beschrieben, der eine Unterteilung der Einschubfelder auch mittels Bobenblechen aufweist. Die Einschubführung für die Einschübe ist, wie üblich, auf diesen Bodenblechen montiert.
Die Bodenbleche sind im Schaltschrank mittels Halterungsstücken mit Anschrägungen, Verengungen, Vorsprüngen und Verdickungen festgelegt, wobei das Bodenblech jeweils noch einen Schlitz zur Aufnahme eines dieser Halterungsstücke aufweisen muß.

Die Einschübe sind, wie in der DE-PS 32 43 130 gezeigt und beschrieben ist, mit einem als Strangpreßprofil ausgebildeten Bodenteil versehen, das zur Aufnahme der Einschubführung eine C-förmige Einformung aufweist.

Derartige Schaltschränke sind konstruktiv aufwendig und haben den Nachteil, daß die Zugänglichkeit in dem Geräteraum durch die fest im Schaltschrank angeordneten Fachböden behindert wird.
Letzteres ist insbesondere dann von Nachteil, wenn Leitungen zwischen einer den Geräteraum und Stromsammelschienen trennenden Schottwand und den Einschüben vorhanden sind. Die Leitungen sind dann schwer zugänglich.

Ein noch höherer konstruktiver Aufwand entsteht, wenn die Einschübe auf Rollen fahrbar gelagert sind, wie in der DE-AS 25 15 153 gezeigt und beschrieben ist oder der DE-GM 76 32 638, bei der die Einschübe mittels U-förmiger Befestigungs- und Erdungsschienen erfolgt, bei denen die Schienen mittels Sperrzahnschrauben und am Schaltschrank angebrachten Einziehmuttern an den Seiteninnenwänden angeordnet sind.

Es ist weiterhin bekannt, Geräteträger aus formbeständigen Kunststoff zu verwenden, auf denen mehrere Schaltgeräte befestigt werden können und ohne Führungsschienen oder dergleichen auf Stromsammelschienen mittels Steckkontakten greifen können. Eine Führung wird bei dieser Anlage teilweise durch die Form der Steckkontakte erreicht.
Die einzelnen untereinander angeordneten Geräteträger sind hierbei durch an den hinteren Längsstreben festgelegte Kunststoff-Zwischenwände voneinander abgeschottet.
Ein derartiger Geräteträger ist in der ABB-Firmenschrift "Modulares Niederspannungs-Schaltanlagen-System MNS" Nr. D IL 1026 91 DE gezeigt.

Die dort gezeigte Schaltanlage ist bei verhältnismäßig geringem konstruktiven Aufwand modular aufgebaut und variable bei Änderungen bestehender Anlagenstrukturen.

Diese Konstruktion führt zwar gegenüber den eingangs vorgenannten Schaltanlagen zu einer Verminderung des konstruktiven Aufwandes, die aber zum einen durch einen Verzicht auf eine Führung und zum anderen durch einen Verzicht auf die Möglichkeit von Funktionsstellungen, wie Betriebs-, Test- und Aus-Stellung, erkauft wird.

Wenn der Geräteträger gesteckt ist, muß dieser außerdem mit mehreren Befestigungsschrauben an die hinteren Längsstreben verschraubt werden.

Eine weitere keine Führungsschienen aufweisende Schaltanlage ist in den Druckschriften CA 2,010,682 A1 und CA 2,010,684 gezeigt und beschrieben. Diese Konstruktion besteht im wesentlichen aus Geräteträgern in Form von zwei Schaltgeräte aufnehmenden Gehäusen mit zusätzlich in der Steckkontaktebene seitlich angeordneten Befestigungshaken.
Diese Befestigungshaken unterstützen zwar die Führung, aber nur in der Nähe der Stromschienen.

Zur Führung auch von Schottplatten sind aus der DE-C1 41 11 403 C-förmige Querstreben bekannt. Zur Führung der Schottplatte ist eine gesonderte Querstrebe erforderlich. Weiterhin nachteilig ist, daß aufgrund der Locheinteilung des Rahmengestells ein gewisser Abstand zwischen den zwei Quersteben erforderlich ist.

Die EP-A2 0 311 574 zeigt einen Einschubverteiler mit an Seitenwänden befestigten Querstreben, die vertikal angeordnete Führungskanten aufweisen. Die Einschübe sind jedoch relativ kostruktiv aufwendig.

Aus der CH-A5 666 376 ist ein Einschubschrank mit steckbaren Einschüben bekannt, das an Längsstreben befestigte U-förmige Querstreben aufweist, die zur Führung des Einschubes dienen.
Die Einschübe weisen eine L-Form auf, wobei ein erster Abschnitt das Bodenteil und zweiter Abschnitt eine Frontplatte bildet.
Die dort verwendete Querstebe weist keine speziellen Führungsmittel auf. Die Führung wird vielmehr durch das eigentliche U-Profil erreicht, wobei der Einschub lediglich zwischen beiden Seitenschenkeln des U-Profils geführt wird.
Beim Herausziehen eines Einschubes steht der darunter befindliche Einschub unter Spannung. Eine Berührung von spannungsführenden Teilen des darunter befindlichen Einschubs wird nicht verhindert.
Die Einschübe sind weiterhin für größere Schaltgeräte nicht geeignet, weil zum einen die Gerätefläche auf die Boden- bzw. Frontplatte begrenzt wird und zum anderen die Verwindungssteifigkeit des Einschubes nicht ausreichend ist.

Aufgabe der Erfindung ist es deshalb, eine Niederspannungs-Schaltanlage nach dem Oberbegriff des Anspruches 1 zu schaffen, die bei geringem konstruktiven Aufwand mit einer Führung der Gerätegruppen versehen ist.

Die Aufgabe der Erfindung wird durch die kennzeichnenden Merkmale des Anspruches 1 gelöst, weiterhin wird die Aufgabe durch die Merkmale des Anspruches 13 gelöst, während in den Unteransprüchen besonders vorteilhafte Weiterbildungen der Erfindung gekennzeichnet sind.

Durch die kennzeichnenden Merkmale des Anspruches 1 wird der konstruktive Aufwand in bezug auf die Befestigung von Führungsmitteln für die Einschübe vermindert, weil diese in den Querstreben bereits integriert sind. Die Querstreben sichern außerdem die Steifigkeit des Schaltschrankgerüstes und erlauben gleichzeitig eine Vielzahl von Befestigungs- und Funktionsmöglichkeiten. Durch die kennzeichnenden Merkmale des Anspruches 1 wird in einfacher Weise die Möglichkeit geschaffen, ohne zusätzliche Elemente bei Bedarf Zwischenböden einzusetzen.

Von besonderem Vorteil ist es, wenn die Querstreben aus einem Blechprofil als Stanzbiegeteil bestehen und an mindestens einem Seitenschenkel in Abstand voneinander mehrere stufenförmige oder Z-förmige Führungsansätze 5 herausgedrückt sind, die zur Führung des Einschubes 7 vorgesehen sind, wodurch sich eine reibungsarme Führung von Einschüben oder Zwischenböden und sichere Stützung auch in teilweise eingeschobener Stellung ergibt.

Besonders günstig ist es, wenn auf dem darunter befindlichen Seitenschenkel des U-Profils ebenfalls stufenförmige Führungsansätze vorhanden sind, die geeignet sind Zwischenböden aufzunehmen, weil die Querstreben bei Unsymmetrie, hier bei ungleichen Enden, beidseitig verwendet werden können, so z.B. wenn nur einseitig Halteelemente angeformt sind.

Damit die Zwischenböden ohne zusätzliche Befestigungsmittel in einfacher Weise kraft- und formschlüssig befestigt werden können, sind an den Querstreben schlitzförmige Ausbrüche für die Befestigung von Zwischenböden vorhanden und die Zwischenböden mit krallenartigen Füßchen mit einem schrägwinkelig verlaufenden Steg versehen.

Zur Verbesserung der Führungsgenauigkeit können zwischen den Führungsansätzen herausgedrückte Führungsstreifen angeordnet sein, wobei dann die Führungskanten des Einschubes randseitig bündig an den Führungsstreifen anliegen.

Besonders vorteilhaft ist es, bei Verwendung von Querstreben als Druckgußteile, wenn die Querstreben mit den kennzeichnenden Merkmalen der Ansprüche 7 bis 9 versehen sind.

Eine weitere Einsparung von Befestigungselementen und Montagezeit wird erreicht, wenn bereits die Querstreben zur Befestigung an Längsstreben abgewinkelten Befestigungslaschen mindestens einseitig aufweisen.

Ebenso entfällt das Erfordernis von Haltestücken für die Festlegung von zur Rückwand oder Vorderwand parallelen und waagerechten L- oder U-förmigen Streben, wenn ein U-förmiger Halteansatz vorhanden ist, wobei der Basisschenkel des Halteansatzes dann satt auf einer Längsstrebe aufliegt und dieser Halteansatz einstückig mit der Querstrebe verbunden ist.

In weiterer Ausgestaltung der Erfindung weist ein Basisschenkel der Querstrebe eine Reihe von fluchtenden Löchern für die Befestigung von den Geräteraum und Kundenanschlußraum trennenden Schottwänden auf, die jeweils einem Einschubfach zugeordnet sein können, wobei die Anzahl der Löcher und Ausbrüche in der Schottwand der Gerätebestückung angepasst, also unterschiedlich, sein kann.

Durch die kennzeichnenden Merkmale des Anspruches 13 wird in einfacher Weise erreicht, daß keine Montage zusätzlicher Führungsmittel, wie Führungsschienen, Strangpreßprofile oder dergleichen, erforderlich ist. Gleichzeitig wird erreicht, daß die Führung in einfacher Weise und bei geringem Platzbedarf in dem Bodenbereich jeweils eines Einschubfaches angeordnet ist, wodurch der gesamte Seitenbereich frei verfügbar für Leitungsausbrüche, weitere Steckkontakte oder andere Aufgaben ist. Besonders günstig ist es hierbei, daß der Einschub im wesentlichen aus einem Basisträger, der die Führungskante aufweist und einem senkrecht hierzu angeordneten Geräteträger für die Befestigung der Schaltgeräte besteht, was eine kostengünstige Herstellung von im wesentlichen nur zwei Teilen bei relativ geringem Montageaufwand ermöglicht. Besonders vorteilhaft ist, daß der Einschub verwindungssteif und auch für größere Schaltgeräte geeignet ist.

Günstig für die Montage und Herstellung ist auch, daß der Basisträger aus einem L-förmigen Blechabschnitt mit einem Bodenteil und einer rechtwinkeligen, einstückig angeformten und parallel zur Schaltschrankrückwand angeordneten Rückwand besteht.

Weitere vorteilhafte Ausgestaltungen in bezug auf den Einschub, wie beispielsweise Einsparung von Material, Winkelstäben, Stützprofilen, Befestigungsteilen für Kontaktapparate oder der Möglichkeit der Fertigung auch in geringen Stückzahlen, ergeben sich aus den Ansprüchen 15 bis 23.

Ferner können zur Verbesserung der Handhabung in dem vorderen Bereich ein oder mehrere Griffe oder Aussparungen entweder beidseitig oder in der Mitte vorhanden sind.

Eine Erdung bei gleichzeitiger Befestigung ergibt sich in einfacher Weise aus den Merkmalen des Anspruches 25.

Ferner können den Geräteraum und Kundenanschlußraum trennende Schottwände nur in montagegerechter Stellung gebracht werden, wenn diese oberrand- und unterrandseitig mit Einschnitten und Stegen unterschiedlicher Breite versehen sind, die bei der Montage in dem Bereich der Querstreben ineinandergreifen, wobei Löcher an den Querstreben mit Löchern oder Einschnitten an den Stegen 53 korrespondieren.

Ebenfalls günstig ist es, wenn an den Schottwänden oberrand- oder unterrandseitig Stege parallel herausgedrückt bzw. Z-förmig sind, die derart an der benachbarten Schottwand greifen und sich abstützen, daß keine zusätzlichen Befestigungsmittel, wie Befestigungsschrauben, erforderlich sind. Die Befestigung kann dann mit beispielsweise nur zwei Schrauben oberrand- bzw. unterrandseitig erfolgen.

Es ist zwar bekannt, seitliche Profile als Strangpreßprofile mit senkrechten Führungsnuten und Führungskanten zu verwenden, die aber nur als Führungselemente vorgesehen sind. Ein derartiges Profil ist in der Firmenschrift Logstrub-Einschubsystem Nr. 0005/0289/1000, Seiten 4 und 6 zu sehen.

Anhand der Zeichnung, in der bevorzugte Ausführungsbeispiele dargestellt sind, sollen die Erfindung, weitere Ausgestaltungen und Verbesserungen der Erfindung und weitere Vorteile näher beschrieben und erläutert werden.

Es zeigt:
- Fig. 1: eine perspektivische Darstellung einer Querstrebe,
- Fig. 2: eine Vorderansicht der in der Fig. 1 gezeigten Querstrebe,
- Fig. 3: eine Darstellung der Querstrebe mit einem zeichnerischen Ausbruch, bei der der untere Schenkel sichtbar ist,
- Fig. 4: eine perspektivische Darstellung einer der Fig. 3 entsprechenden Variante der Querstrebe,
- Fig. 5: eine perspektivische Darstellung einer anderen Variante der Querstrebe,
- Fig. 6: eine Vorderansicht der in der Fig. 5 gezeigten Querstrebe,
- Fig. 7: eine perspektivische Darstellung des Einschubs in Wirkverbindung mit der Querstrebe,
- Fig. 8: eine perspektivische Darstellung eines Basisträgers eines Einschubes,
- Fig. 9: eine perspektivische Darstellung eines Geräteträgers eines Einschubes,
- Fig. 10: eine perspektivische Darstellung eines Geräteträgers eines Einschubes für größere Schaltgeräte,
- Fig. 11: eine perspektivische Darstellung eines Schaltschrankes ohne Verkleidung mit teilweise auseinandergezogenen Elementen und mit eingeschobenem Zwischenboden,
- Fig. 12: eine perspektivische Darstellung eines Schaltschrankes ohne Verkleidung mit teilweise auseinandergezogenen Elementen und teilweise herausgezogenem Einschub,
- Fig. 13: eine perspektivische Darstellung eines Schaltschrankes ohne Verkleidung mit geschlossener Fronttür,
- Fig. 14: eine Seitenansicht eines Zwischenbodens und
- Fig. 15: eine Einzelheit Z des Zwischenbodens.

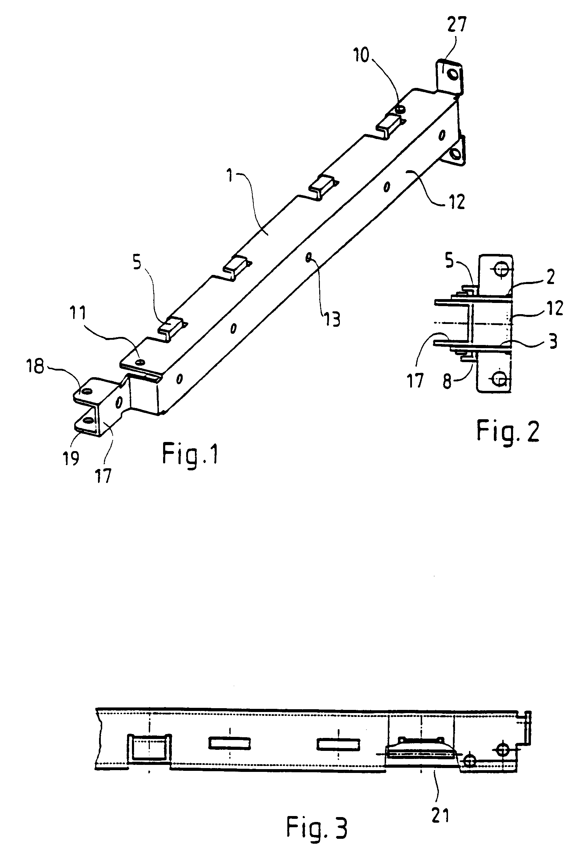

Die Querstrebe 1, die in den Figuren 1, 2 und 7 zu sehen ist, besteht aus einem U-förmigen Blechprofil als Stanzbiegeteil.
Die Seitenschenkel 2 und 3 des U-Profils liegen in einer zum Einschubboden parallelen Ebene in dem Schaltschrank 4.
Auf dem darüberliegenden Seitensschenkel 2 des U-Profils sind in Abstand voneinander mehrere stufenförmige oder Z-förmige Führungsansätze 5 herausgedrückt, die zur Führung des Einschubes 7 vorgesehen sind. Auf dem darunter befindlichen Seitenschenkel 3 des U-Profils sind ebenfalls stufenförmige Führungsansätze 8 vorhanden, die jedoch dazu dienen, Zwischenböden 9 aufzunehmen. Die Zwischenböden 9 weisen dann eine parallel zur Bodenebene angeordnete Führungskante, die hier nicht gezeigt ist.

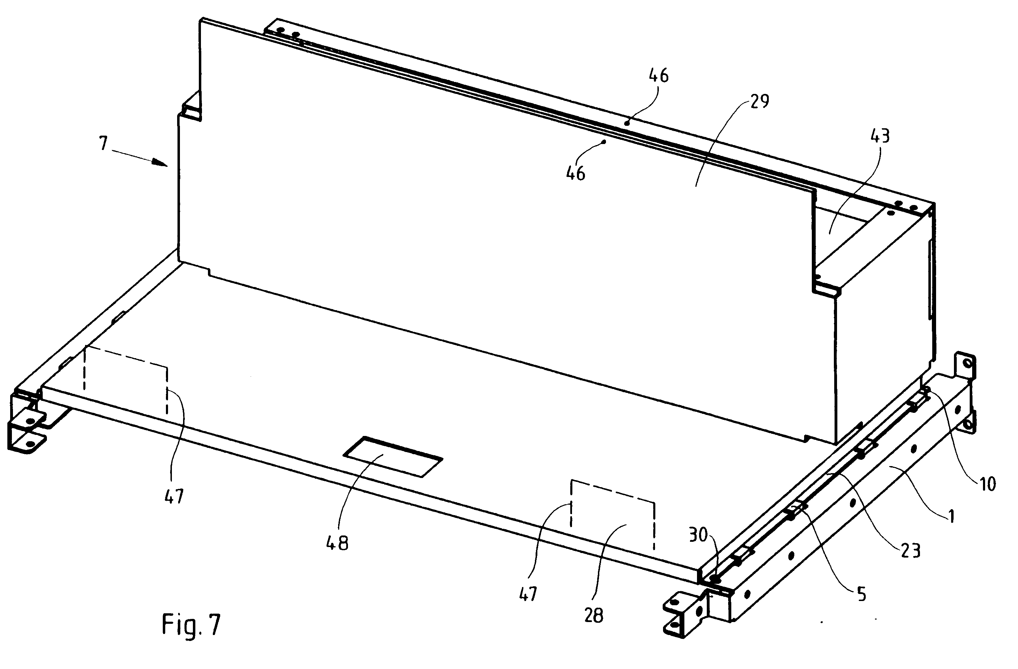

Eine Begrenzung des Einschubweges in Richtung der Stromsammelschienen, die hinter den Einschüben angeordnet bzw. hinter Schottwänden, die in der DE-GM 90 05 066 näher beschrieben sind, erfolgt mittels eines zylinderförmigen Anschlagzapfens 10, das hier als Schraubenkopf ausgeführt ist, so daß die Steckkontakte, die in der DE-PS 40 13 311 näher erläutert sind, genau auf C-förmige Stromsammelschienen greifen können. Hierzu siehe auch Fig. 7.

Am Ende der Querstrebe 1, gegenüber vom Anschlagzapfen 10 ist eine Bohrung 11 vorhanden, dessen Funktion weiter unten beschrieben ist.

Der senkrechte Basisschenkel 12 weist eine Reihe von fluchtenden Löchern 13 für die Befestigung von den Geräteraum 14 und Kundenanschlußraum 15 trennenden Schottwänden 16 auf, auf die noch weiter unten näher eingegangen wird.

Im vorderen Bereich ist ein ebenfalls U-förmiger Halteansatz 17 einstückig an dem U-Profil angeformt, aber nach innen versetzt angeordnet und mit einem geringeren Abstand der Seitenschenkel 18 und 19 versehen, wobei der Basisschenkel des Halteansatzes 17 satt auf einer Längsstrebe aufliegt. Der Halteansatz 17 erfüllt die Aufgabe, eine zur Rückwand oder Vorderwand parallelen und waagerechten L- oder U-förmigen Strebe 20 festzulegen, dessen Basisschenkel parallel zur Rückwandebene liegt.

Im wesentlichen erfüllt der Halteansatz 17 die Funktion eines in der DE-GM 89 10 310 näher beschriebenen Trägerbausteines.

Zur Befestigung von Zwischenböden 9 können schlitzförmige Ausbrüche 21 entweder beidseitig oder aber auch nur in dem unteren Seitenschenkel 17′ vorhanden sein.
Die beidseitige Anordnung ist bei Unsymmetrie der Querstrebe 1 sinnvoll, wenn beispielsweise eine in der Fig.1 gezeigte Querstrebe 1 verwendet wird, wobei die Ausbrüche 21 in der Fig. 1 nicht gezeigt sind.
Die einseitige Anordnung ist dagegen bei Symmetrie der Querstrebe 1′ sinnvoll, wenn beispielsweise eine nachfolgend beschriebene Ausführungsform eingesetzt wird.
Hierdurch ist eine beidseitige Verwendung der Querstreben 1,1′ möglich.

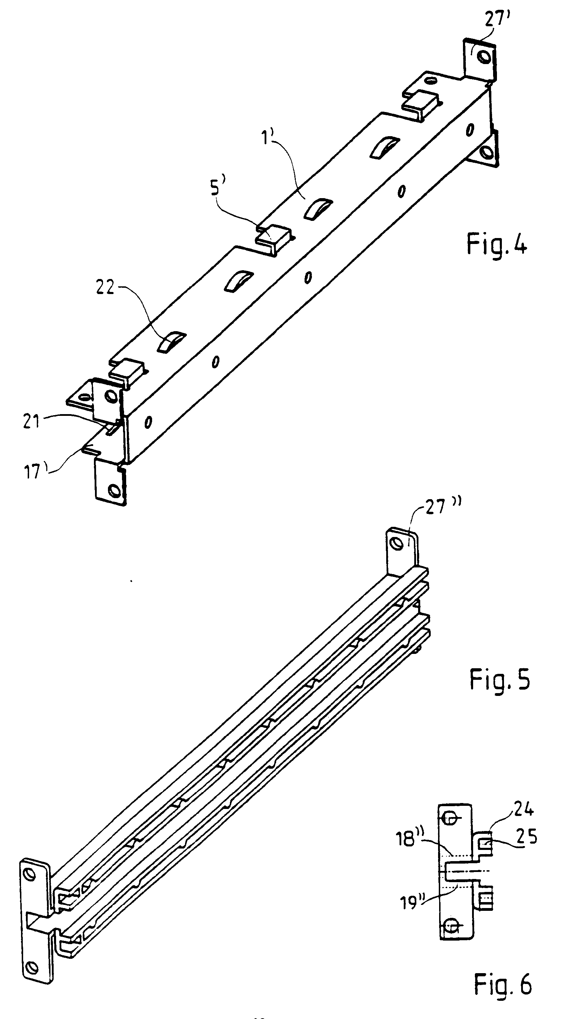

Die in der Fig. 4 gezeigte und ebenfalls als Stanzbiegeteil hergestellte Querstrebe 1′ weist zwischen den Führungsansätzen 5′ herausgedrückte Führungsstreifen 22 auf, die bogenförmig ausgeformt sind und dazu dienen die Führung des Einschubes 7 zu verbessern. Hierbei liegen die Führungskanten 23 des Einschubes 7 randseitig bündig an den Führungsstreifen 22 an.

Die dritte in den Figuren 5 und 6 gezeigte Ausführungsform der Querstrebe 1˝ ist als Druckgußteil gefertigt. An den Enden der U-förmigen Seitenschenkeln 18˝ und 19˝ sind F-förmige Führungsabschnitte 24 einstückig angeformt, die die Führungskante 23 des Einschubes 7 in ihre Nut 25 aufnehmen.

In der Nut 25 sind ferner Verengungen zur Verminderung der Reibung sowie ein Steg zur Anschlagbegrenzung des Einschubes 7 vorgesehen.

Zur Befestigung an den Längsstreben 26 sind alle drei Ausführungsformen der Querstreben 1,1′ und 1˝ mindestens einseitig mit abgewinkelten Befestigungslaschen 27 und an diesen Befestigungslaschen angeordneten Löchern versehen.

Alle drei gezeigten beispielhaften Querstreben 1,1′,1˝ sind sowohl rechts als auch links, also beidseitig verwendbar.

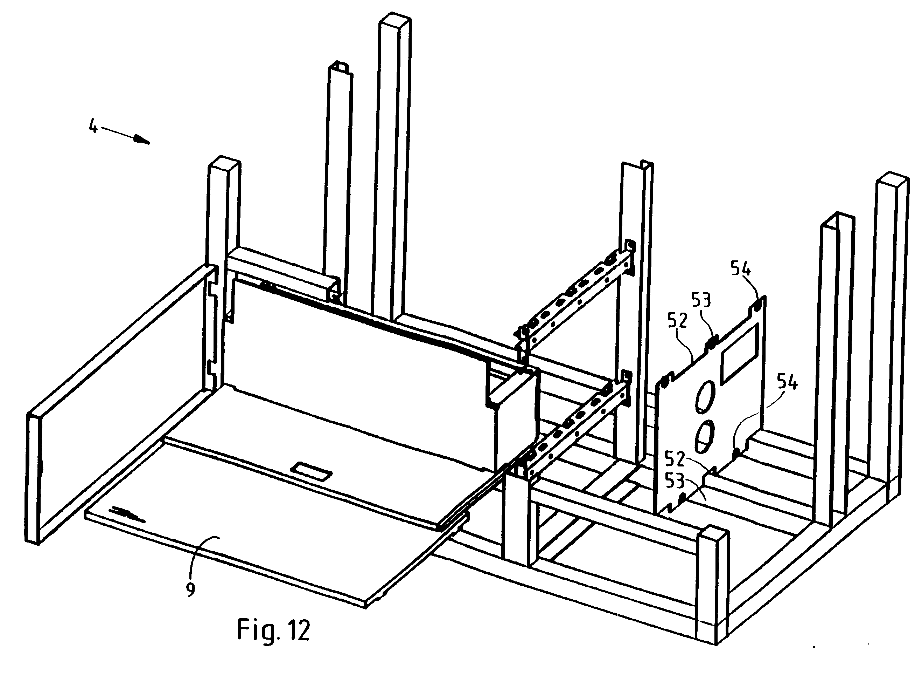

Die Figur 7 zeigt einen Einschub 7 mit den Querstreben 1 in eingeschobener Stellung. Die Führungsansätze 5 führen und greifen den Einschub 7 an seinen Führungskanten 23 auch bei nur teilweise eingeschobener Stellung, wie noch in der Fig 12 zu sehen ist.

Der Einschub besteht im wesentlichen aus einem Basisträger 28 und einem senkrecht hierzu angeordneten Geräteträger 29 für die Befestigung der Schaltgeräte.

In der Führungskante 23 ist in dem vorderen Bereich ein halbkreisförmiger Einschnitt 30 vorhanden, welcher in der Betriebsstellung mit der Bohrung 11 korrespondiert und für die form- und kraftschlüssige Befestigung des Einschubes 7 mittels einer hier nicht dargestellten Schraube geeignet ist.
Gleichzeitig wird zwischen den aus Metall bestehenden Einschub und der metallischen Querstrebe 1, bzw. dem Schaltschrank eine sichere Erdung in einfacher Weise erreicht.

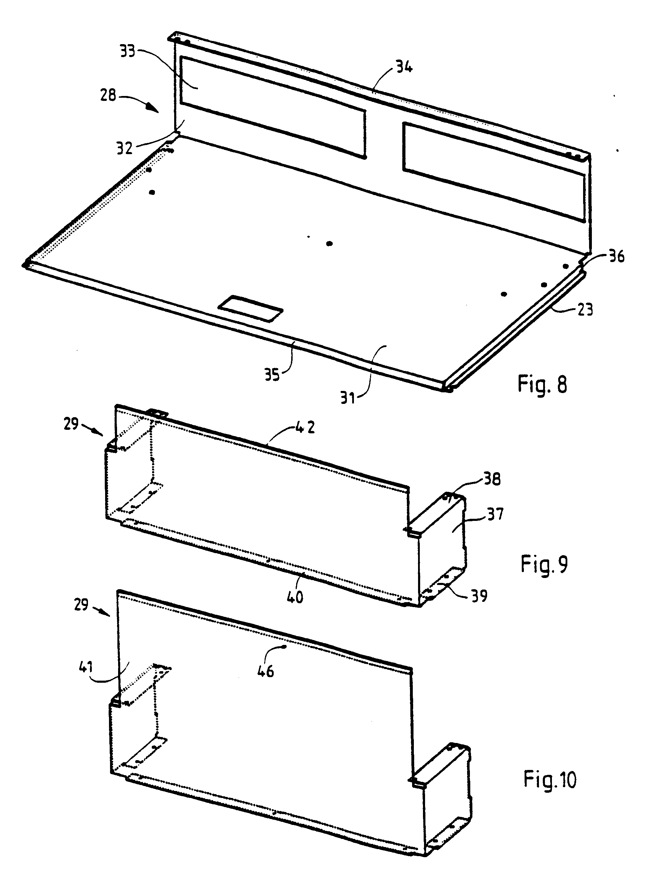

Der in Fig. 8 gezeigte Basisträger 28 besteht aus einem L-förmigen Blechabschnitt mit einem Bodenteil 31 und einer rechtwinkeligen, einstückig angeformten und parallel zur Schaltschrankrückwand angeordneten Rückwand 32.
Die Rückwand 32 ist mit Aussparungen 33 für Steckanordnungen, die auf die Stromsammelschienen greifen, versehen.
In einer zur Bodenebene parallelen Ebene ist auf der Rückwand 32 ein abgewinkelter Abschnitt 34 für die Befestigung des Geräteträgers 29 vorhanden.

Randseitig des Bodenteils 31 sind an der vorderen, rechten und linken Seite nach unten gerichtete Abwinkelungen 35, 36 angeformt, die die Verwindungssteifigkeit des Einschubes verbessern, wobei an der linken und rechten Seite jeweils die Abwinkelungen 36 in die Führungskanten 23 übergehen.

Der im wesentlichen U-förmige Geräteträger 29 ist genauso breit wie der Basisträger 28 und ist senkrecht auf den Basisträger 28 ungefähr in dem hinteren Drittel angeordnet, wobei der an der Rückwand 32 vorhandene Abschnitt 34 auf den Seitenwänden 37 des Geräteträgers 37 aufliegt bzw. auf Schenkeln 38.
Die als Seitenwände 37 dienenden Seitenschenkel des Geräteträgers 29 sind ebenfalls U-förmig, wobei der obere nach innen abgewinkelte Schenkel 38 mit dem Abschnitt 34 verbunden ist, vorzugsweise vernietet ist und der untere Schenkel 39 mit dem Bodenteil 31 verbunden ist.

Weiterhin sind der Geräteträger 29 und der Basisträger 28 durch einen unterhalb der Gerätefläche 41 und zur Rückwand winkelig angeformten Abschnitt 40, der satt auf dem Bodenteil 31 aufliegt, verbunden, wobei der Basisschenkel des Geräteträgers 29 die Gerätefläche bildet.

Die als Montageplatte dienende Gerätefläche 41 kann, wie aus den Figuren 9 und 10 zu erkennen ist, deutlich höher sein als die Seitenwände 37, wodurch auch größere Schaltgeräte auf die Gerätefläche befestigt werden können. Die Gerätefläche 41 ist sonach unabhängig von der Höhe der Seitenwände 37.

Zur Versteifung des Geräteträgers 29 ist der obere Rand 42 nach hinten umgebördelt.

Der hinter der Gerätefläche 41 entstandene Raum 43, der in der Fig. 7 durch eine Bezugsziffer angedeutet ist, ist von oben zugänglich und dient zur Aufnahme von Einschubsteckern und dessen Leitungen, die über nicht gezeigte Ausbrüche in dem Geräteträger 29 hindurchgeführt und an auf der Gerätefläche 41 befindlichen Schaltgeräten angeschlossen sind.

Die Rückseite der Gerätefläche 41 kann auch für die Besfestigung weiterer Geräte verwendet werden. Zur Versteifung bei zu hohem Gerätegewicht, insbesondere bei großen Geräteträgern 29, wie in Fig. 10 gezeigt ist, können in einfacher Weise zur Verbesserung der Tragfähigkeit diagonale hier nicht gezeigte Versteifungsstangen, die beispielsweise an den Punkten 46 befestigt sind, eingesetzt werden.

In dem vorderen Bereich können Griffe 47 oder Aussparungen 48 entweder beidseitig oder in der Mitte vorhanden sein, um die zum Teil schweren Einschübe bewegen und tragen zu können, wobei die Aussparungen 48 vorzugsweise mit einem Kunststoff umrandet sind. Die Griffe 47 sind dann senkrecht auf dem Basisträger 28 befestigt.

Die Laststromabgänge werden direkt ohne steckbare Verbindung von den Schaltgeräten in den Kundenanschlußraum geführt und von dort zu den Motoren oder Anlagen weitergeführt.
Hierzu dienen Löcher 44 an den Schottwänden 16, die geeignet sind, entsprechende Kabeltüllen aufzunehmen.

Die Schottwand 16 ist noch mit einem rechteckförmigen Ausbruch 45 versehen, der für eine oder mehrere Stecker- oder Buchsenelemente für die Steuerstromleitungen vorgesehen ist, wobei die Stecker- oder Buchsenelemente mit dem Einschub seitlich fest verbunden sind, vorzugsweise auf einem Schenkel 38 und die Gegenstücke von der Kundenanschlußseite steckbar sind.

Die Ausbrüche 45 können ferner, wenn diese nur teilweise ausgefüllt werden, in den noch offenen Bereichen mit einschnappbaren Blenden abgedeckt sein.

Die elektrische Verbindung sowohl der Steuerstromleitungen als auch der Abgangsleitungen für den Laststrom müssen hier getrennt werden bevor der Einschub herausgezogen wird.

Es können aber auch an der Rückseite des Einschubes steckbare Elemente für die Abgangsleitungen des Laststromes und Steuerstromes angeordnet sein, die mit Gegenstücken im Schaltschrank korrespondierenden.

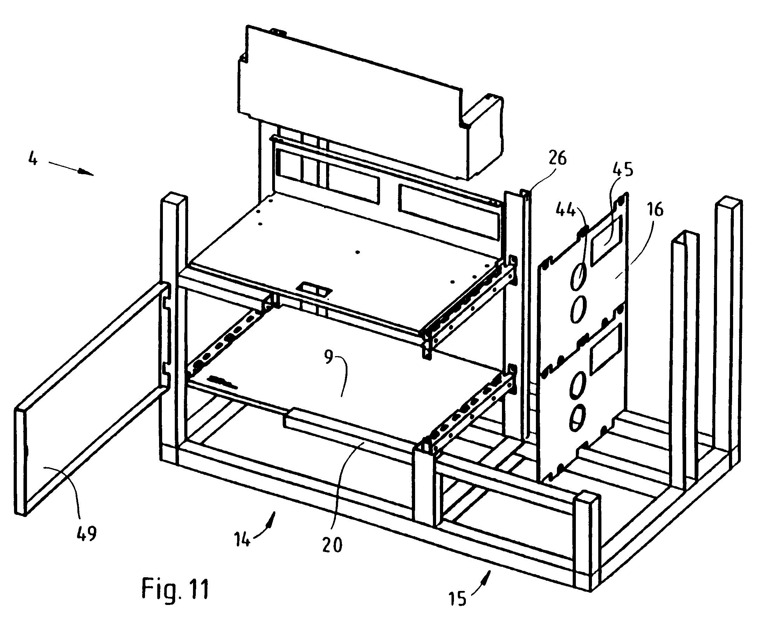

Wie die Fig. 11 zeigt, ist jedes Einschubfach mit einer Tür 49 versehen, die eine mit der Schaltgeräteachse in Wirkverbindung stehenden Aussparung aufweisen kann, die in bekannter Weise derart wirkt, daß die Tür 49 nur zu öffnen ist, wenn das Schaltgerät ausgeschaltet ist.

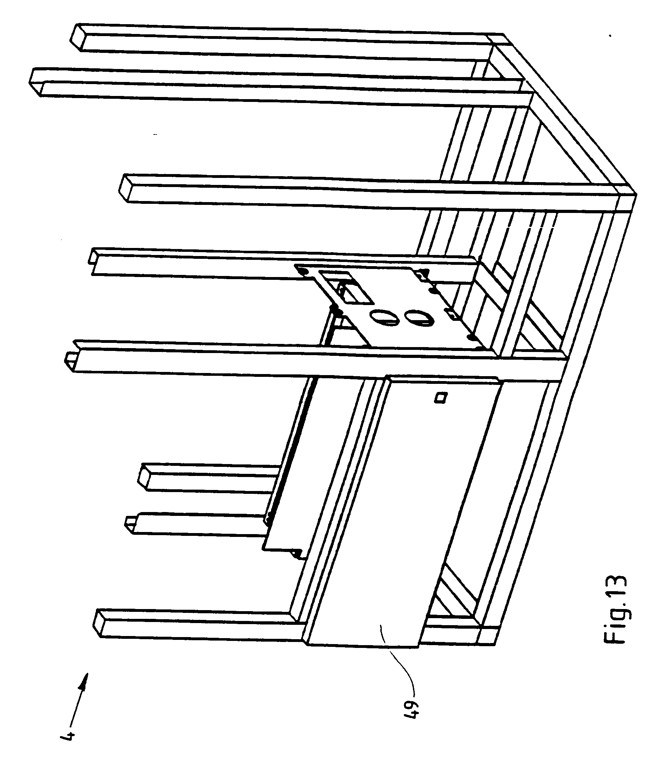

Die Zwischenböden 9 in den Figuren 11 bis 15 können bei Bedarf eingesetzt werden, um eine höhere Sicherheit zu erreichen oder aber auch weggelassen werden, weil diese keine notwendigen Führungsmittel für den Einschub 7 enthalten, wodurch sich aber der Vorteil ergibt, daß ohne Einschübe der gesamte Geräteraum ungehindert zugänglich ist.

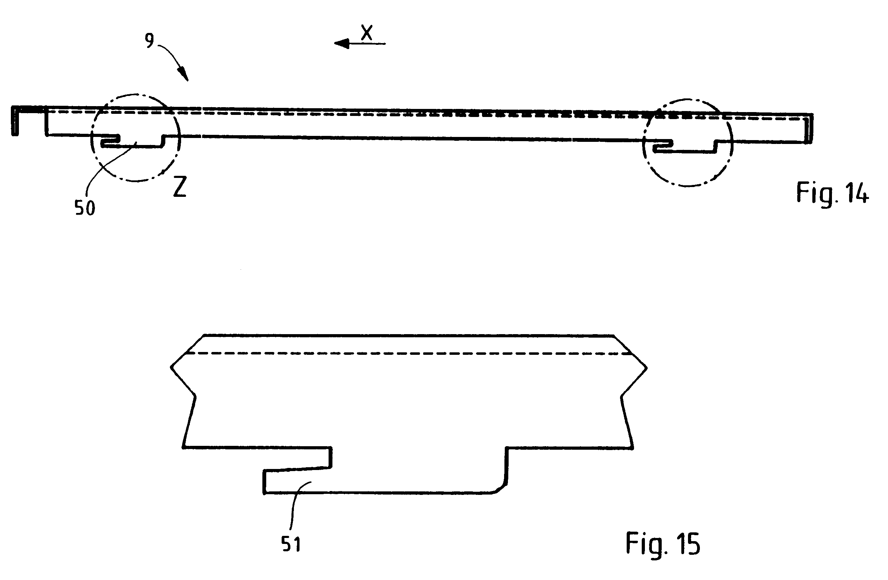

Die Zwischenböden können mit in einer parallelen Ebene der Bodenebene liegenden Führungskanten, ähnlich der Einschübe oder wie in den Figuren 14 und 15 gezeigt ist, mit krallenartigen Füßchen 50, die in schlitzförmigen Ausbrüche 21 greifen, versehen sein.
Die Füßchen 50 sind mit einem schrägwinkelig verlaufenden Steg 51 versehen, der den Zwischenboden 9 festklemmt, ohne daß zusätzliche Befestigungsmittel erforderlich sind.

Die Zwischenböden 9 sind weiterhin zur Versteifung abgekantet und können, so wie der Basisträger 28, mit Belüftungsöffnungen versehen sein.

Die Schottwände 16, die in den Figuren 11 und 12 auseinandergezogen dargestellt sind, sind oberrand- und unterrandseitig mit Einschnitten 52 und Stegen 53 unterschiedlicher Breite versehen, die bei der Montage in dem Bereich der Querstreben 1 ineinandergreifen, wobei die Löcher 13 der Querstreben 1 mit Löchern 54 oder Einschnitten an den Stegen 53 korrespondieren. Hierdurch können die Schottwände 16 nur bei richtiger Lage montiert werden.

Es können auch an den Schottwänden nur oberrand- oder unterrandseitig Stege parallel herausgedrückt bzw. Z-förmig sein, die derart an der benachbarten Schottwand greifen und sich abstützen, daß keine zusätzlichen Befestigungsmittel, wie Befestigungsschrauben, erforderlich sind. Die Schottwände können auch hier nur in einer montagerechten Stellung befestigt werden.

Die Querstrebe 1 bis 1˝ spielt eine wichtige Rolle bei der Steifigkeit des Schaltschrankes.

Ferner sind die Führungskanten 23 des Einschubes 7 abgeschrägt, um ein Einführen zu erleichtern.

## Patentansprüche

1. Niederspannungs-Schaltanlage zur Abgabe oder Verteilung elektrischer Energie mit in Einschüben (7) befindlichen Schaltgeräten oder Gerätegruppen von Schaltgeräten, wie Leistungsschalter, Motorschutzschalter, Schütze oder dergleichen, die in dem Schaltschrank eine Führung aufweisen, wobei mindestens die elektrische Verbindung von den Stromsammelschienen zu den Schaltgeräten steckbar ist, wobei parallel zur Einschubrichtung Querstreben (1,1′,1˝) vorhanden sind, die Führungsmittel für die Einschübe (7) aufweisen und die Querstreben (1,1′,1˝) an Längsstreben (26) befestigt sind, wobei ferner die Querstreben (1,1′,1˝) U-förmig sind mit parallel zur Bodenebene liegenden Seitenschenkeln (2,3), **dadurch gekennzeichnet,** daß die Führungsmittel einstückig mit den Querstreben (1,1′,1˝) verbunden oder einstückig aus dem Material herausgedrückt sind und daß der obere Seitenschenkel (2) zur Führung eines Einschubes dient und der untere Seitenschenkel (3) zur Führung oder Befestigung eines Zwischenbodens (9) vorgesehen ist.

2. Niederspannungs-Schaltanlage nach Anspruch 1, dadurch gekennzeichnet, daß die Querstreben (1,1′) aus einem Blechprofil als Stanzbiegeteil bestehen und daß an mindestens einem Seitenschenkel (2,3) in Abstand voneinander mehrere stufenförmige oder Z-förmige Führungsansätze (5) herausgedrückt sind, die zur Führung des Einschubes (7) vorgesehen sind.

3. Niederspannungs-Schaltanlage nach Anspruch 2, dadurch gekennzeichnet, daß auf dem darunter befindlichen Seitenschenkel (3) des U-Profils ebenfalls stufenförmige Führungsansätze (8) vorhanden sind, die geeignet sind Zwischenböden (9) aufzunehmen.

4. Niederspannungs-Schaltanlage nach Anspruch 2, dadurch gekennzeichnet, daß schlitzförmige Ausbrüche (21) für die Befestigung von Zwischenböden (9) vorhanden sind und daß die Zwischenböden (9) krallenartige Füßchen (50) mit einem schrägwinkelig verlaufenden Steg (51) aufweisen.

5. Niederspannungs-Schaltanlage nach einem der Ansprüche 2 bis 4, dadurch gekennzeichnet, daß eine Begrenzung des Einschubweges in Richtung der Stromsammelschienen mittels eines zylinderförmigen Anschlagzapfens (10) erfolgt.

6. Niederspannungs-Schaltanlage nach einem der Ansprüche 2 bis 5, dadurch gekennzeichnet, daß zwischen den Führungsansätzen (5′) herausgedrückte Führungsstreifen (22) angeordnet sind, die zur Führung des Einschubes (7) dienen, wobei die Führungskanten (23) des Einschubes (7) randseitig bündig an den Führungsstreifen (22) anliegen.

7. Niederspannungs-Schaltanlage nach Anspruch 1, dadurch gekennzeichnet, daß die Querstrebe (1˝) ein Druckgußteil ist, daß an dem Ende mindestens eines Seitenschenkels (18˝, 19˝) für die Führung des Einschubes (7) ein F-förmiger Führungsabschnitt (24) mit einer Nut (25) einstückig angeformt ist.

8. Niederspannungs-Schaltanlage nach Anspruch 7, dadurch gekennzeichnet, daß in der Nut (25) Verengungen zur Verminderung der Reibung vorhanden sind

9. Niederspannungs-Schaltanlage nach Anspruch 7 oder 8, dadurch gekennzeichnet, daß in der Nut (25) ein Steg zur Anschlagbegrenzung des Einschubes (7) vorhanden ist.

10. Niederspannungs-Schaltanlage nach einem der vorhergehenden Ansprüche, dadurch gekennzeichnet, daß die Querstreben (1,1′,1˝) zur Befestigung an Längsstreben (26) mit abgewinkelten Befestigungslaschen (27) mindestens einseitig versehen sind.

11. Niederspannungs-Schaltanlage nach einem der vorhergehenden Ansprüche, dadurch gekennzeichnet, daß in dem vorderen Bereich ein U-förmiger Halteansatz (17) für die Festlegung einer zur Rückwand oder Vorderwand parallelen und waagerechten L- oder U-förmigen Strebe (20) vorhanden ist, wobei der Basisschenkel des Halteansatzes (17) satt auf einer Längsstrebe aufliegt und daß der Halteansatz (17) einstückig mit der Querstrebe (1) verbunden ist.

12. Niederspannungs-Schaltanlage nach einem der vorhergehenden Ansprüche, dadurch gekennzeichnet, daß ein Basisschenkel (12) der Querstrebe (1,1′,1˝) eine Reihe von fluchtenden Löchern (13) für die Befestigung von den Geräteraum (14) und Kundenanschlußraum (15) trennenden Schottwänden (16) aufweist.

13. Niederspannungs-Schaltanlage zur Abgabe oder Verteilung elektrischer Energie mit in Einschüben (7) befindlichen Schaltgeräten oder Gerätegruppen von Schaltgeräten, wie Leistungsschalter, Motorschutzschalter, Schütze oder dergleichen, die in dem Schaltschrank eine Führung aufweisen, wobei mindestens die elektrische Verbindung von den Stromsammelschienen zu den Schaltgeräten steckbar ist, insbesondere nach einem der Ansprüche 1 bis 12, **dadurch gekennzeichnet,** daß die Einschübe ein Bodenteil (31) und unterhalb der Bodenebene beidseitig eine nach außen gerichtete Führungskante (23) aufweisen, die parallel zur Bodenebene angeordnet ist und einstückig mit dem Bodenteil (31) verbunden ist, daß randseitig des Bodenteiles (31) nach unten gerichtete Abwinkelungen (35, 36) angeformt sind, wobei die seitlichen Abwinkelungen (36) in die Führungskanten (23) übergehen und daß der Einschub im wesentlichen aus einem einstückigen Basisträger (28), der die Führungskante aufweist und einem senkrecht hierzu angeordneten einstückigen Geräteträger (29) für die Befestigung der Schaltgeräte besteht, wobei der Basisschenkel des Geräteträgers (29) die Gerätefläche bildet.

14. Niederspannungs-Schaltanlage nach Anspruch 13, dadurch gekennzeichnet, daß der Basisträger (28) aus einem L-förmigen Blechabschnitt mit einem Bodenteil (31) und einer rechtwinkeligen, einstückig angeformten und parallel zur Schaltschrankrückwand angeordneten Rückwand (32) besteht.

15. Niederspannungs-Schaltanlage nach Anspruch 14, dadurch gekennzeichnet, daß in einer zur Bodenebene parallelen Ebene auf der Rückwand (32) ein abgewinkelter Abschnitt (34) für die Befestigung des Geräteträgers (29) vorhanden ist.

16. Niederspannungs-Schaltanlage nach Anspruch 14 oder 15, dadurch gekennzeichnet, daß die Rückwand (32) mit Aussparungen (33) für Steckanordnungen, die auf die Stromsammelschienen greifen, versehen ist.

17. Niederspannungs-Schaltanlage nach einem der Ansprüche 13 bis 16, dadurch gekennzeichnet, daß der Geräteträger (29) im wesentlichen U-förmig ist.

18. Niederspannungs-Schaltanlage nach Anspruch 17, dadurch gekennzeichnet, daß die Seitenwände (37) des Geräteträgers ebenfalls U-förmig sind, wobei der obere nach innen abgewinkelte Schenkel (38) mit dem Abschnitt (34) vernietet ist und der untere Schenkel (39) mit dem Bodenteil (31) vernietet ist.

19. Niederspannungs-Schaltanlage nach einem der Ansprüche 13 bis 18, dadurch gekennzeichnet, daß der Geräteträger (29) und der Basisträger (28) durch einen unterhalb der Gerätefläche (41) und winkelig angeformten Abschnitt (40), der satt auf dem Bodenteil (31) aufliegt, verbunden sind.

20. Niederspannungs-Schaltanlage nach einem der Ansprüche 17 bis 19, dadurch gekennzeichnet, daß die Höhe der Seitenwände (37) unabhängig von der Höhe der Gerätefläche (41) gleich ist.

21. Niederspannungs-Schaltanlage nach einem der Ansprüche 17 bis 20, dadurch gekennzeichnet, daß die Gerätefläche (41) mindestens 30 % höher als die Seitenwände (37) ist.

22. Niederspannungs-Schaltanlage nach einem der Ansprüche 17 bis 21, dadurch gekennzeichnet, daß bei der Montage eines Schaltgerätes mit mindestens 400 A Nennstrom die Gerätefläche (41) mindestens doppelt so hoch ist wie die Seitenwände (37), wobei das Schaltgerät dann waagerecht angeordnet ist.

23. Niederspannungs-Schaltanlage nach einem der Ansprüche 17 bis 22, dadurch gekennzeichnet, daß zur Versteifung des Geräteträgers (29) der obere Rand (42) umgebördelt oder abgekantet ist.

24. Niederspannungs-Schaltanlage nach einem der Ansprüche 13 bis 23, dadurch gekennzeichnet, daß in dem vorderen Bereich Griffe (47) oder Aussparungen (48) entweder beidseitig oder in der Mitte vorhanden sind.

25. Niederspannungs-Schaltanlage nach einem der vorhergehenden Ansprüche, dadurch gekennzeichnet, daß eine Bohrung (11) oder ein Loch für die Festlegung und Erdung des Einschubes (7) in der Betriebsstellung mittels einer Schraube vorhanden ist, wobei der Einschub dann für diesen Zweck einen Einschnitt (30) oder ein Loch aufweist.

26. Niederspannungs-Schaltanlage nach einem der vorhergehenden Ansprüche, dadurch gekennzeichnet, daß Schottwände (16) oberrand- und/oder unterrandseitig Mittel in Form von Einschnitten und/oder Stegen aufweisen, bei denen die Schottwände (16) nur in montagegerechter Stellung gebracht werden können.

27. Niederspannungs-Schaltanlage nach Anspruch 26, dadurch gekennzeichnet, daß die Schottwände (16) oberrand- und unterrandseitig mit Einschnitten (52) und Stegen (53) unterschiedlicher Breite versehen sind, die bei der Montage in dem Bereich der Querstreben (1) ineinandergreifen, wobei Löcher (13) an den Querstreben (1) mit Löchern (54) oder Einschnitten an den Stegen 53 korrespondieren.

28. Niederspannungs-Schaltanlage nach Anspruch 27, dadurch gekennzeichnet, daß an den Schottwänden oberrand- oder unterrandseitig Stege parallel herausgedrückt bzw. Z-förmig sind, die derart an der benachbarten Schottwand greifen und sich abstützen, daß keine zusätzlichen Befestigungsmittel, wie Befestigungsschrauben, erforderlich sind.

## Claims

1. Low-voltage switching installation for the delivery or distribution of electrical energy, with such switch gear or such groups of switch gear, as power switches, protective motor switches, contactors, or similar devices which are located in plug-in units (7) and present a guide in the switch cabinet, while at least the electrical connection from the current busbars to the switching devices is pluggable, while cross struts (1, 1′, 1˝) are arranged in parallel with regard to the plug-in direction and present means for the guidance of the plug-in units (7), while the cross struts (1, 1′, 1˝) are fixed to longitudinal struts (26), and while the cross struts (1, 1′, 1˝) are U-shaped in addition to this and have lateral legs (2, 3) located in parallel with regard to the bottom plane, **wherein** the means for guidance are connected to the cross struts (1, 1′, 1˝) consisting of a single piece or have been pressed out of the material, forming a single piece, and wherein the upper lateral leg (2) allows the guidance of one plug-in unit and wherein the lower lateral leg (3) is provided for the guidance or for the fixing of an intermediate bottom (9).

2. Low-voltage switching installation as claimed in claim 1, **wherein** the cross struts (1, 1′) consist of a sheet metal profile made as a pressed element and wherein several step-shaped or Z-shaped guiding projections (5) have been pressed out of at least one lateral leg (2, 3) at a distance with regard to one another and in order to serve for the guidance of the plug-in unit (7).

3. Low-voltage switching installation as claimed in claim 2, **wherein** the lateral leg (3) belonging to the U-profile and situated below also presents step-shaped guiding projections (8) which are suitable to receive the intermediate bottoms (9).

4. Low-voltage switching installation as claimed in claim 2, **wherein** slot-shaped sections (21) are provided for the fixing of intermediate bottoms (9) and wherein the intermediate bottoms (9) present small claw-type feet (50) with a web (51) arranged at an oblique angle.

5. Low-voltage switching installation as claimed in any claim 2 through 4, **wherein** the plug-in path in the direction of the current busbars is limited by means of a cylindrical stop pin (10).

6. Low-voltage switching installation as claimed in any claim 2 through 5, **wherein** guiding strips (22) are pressed out and arranged between the guiding projections (5′) in order to serve for the guidance of the plug-in unit (7), the guiding edges (23) of the plug-in unit (7) touching against the guiding strips (22) in an even way at their edges.

7. Low-voltage switching installation as claimed in claim 1, **wherein** cross strut (1˝) is a diecast part, wherein an F-shaped guiding section (24) with a groove (25) is formed as a single part for the guidance of the plug-in unit (7) at the end of at least one lateral leg (18˝, 19˝).

8. Low-voltage switching installation as claimed in claim 7, **wherein** contractions exist in groove (25) in order to reduce friction.

9. Low-voltage switching installation as claimed in claim 7 or 8, **wherein** a web exists in groove (25) in order to serve as a limit stop for the plug-in unit (7).

10. Low-voltage switching installation as claimed in any of the above claims, **wherein** the cross struts (1, 1′ , 1˝) are provided with fixing straps (27) arranged at an angle at least on one side in order to allow the fixing at longitudinal struts (26).

11. Low-voltage switching installation as claimed in any of the above claims, **wherein** a U-shaped holding projection (17) is provided in the front-side area in order to secure an L-shaped or U-shaped strut (20) running in parallel or in a horizontal way with regard to the rear wall or front-side wall, while the base leg of the holding projection (17) rests fully on a longitudinal strut and wherein the holding projection (17) is connected to the cross strut (1) in such a way as to form a single piece.

12. Low-voltage switching installation as claimed in any of the above claims, **wherein** one base leg (12) of cross strut (1, 1′, 1˝) presents a row of aligned holes (13) allowing the fixing of the bulkhead walls (16) which separate the compartment for equipment (14) and the compartment for client connections (15).

13. Low-voltage switching installation for the delivery or distribution of electrical energy, with such switch gear or such groups of switch gear, as power switches, protective motor switches, contactors, or similar devices which are located located in plug-in units (7) and present a guide in the switch cabinet, while at least the electrical connection from the current busbars to the switching devices is pluggable, especially as claimed in any claim 1 through 12, **wherein** the plug-in units present a bottom part (31) and a guiding edge (23) which is directed towards the outside at both sides below the bottom plane, which is arranged in parallel with regard to the bottom plane and connected to the bottom part (31), forming a single part, wherein angle elements (35, 36) are formed and directed towards the lower side at the edge of the bottom part (31), while the lateral angle elements (36) gradually change into the guiding edges (23), and wherein the plug-in unit essentially consists of a base carrier (28), which consists of a single part and presents the guiding edge, and of a device carrier (29), which is arranged vertically with regard to the latter and allows the fixing of the switch gear, while the base leg of the device carrier (29) forms the device plane.

14. Low-voltage switching installation as claimed in claim 13, **wherein** the base carrier (28) consists of an L-shaped sheet metal section with a bottom part (31) and a right-angled rear wall (32), formed as a single part arranged in parallel with regard to the rear wall of the switch cabinet.

15. Low-voltage switching installation as claimed in claim 14, **wherein** a section (34) presenting an angle is provided at the rear wall (32) and in a plane running in parallel with regard to the bottom plane in order to allow the fixing of device carrier (29).

16. Low-voltage switching installation as claimed in claim 14 or 15, **wherein** the rear wall (32) is provided with openings (33) allowing for plug arrangements which are connected to the current busbars.

17. Low-voltage switching installation as claimed in any claim 13 through 16, **wherein** the device carrier (29) is essentially U-shaped.

18. Low-voltage switching installation as claimed in claim 17, **wherein** the lateral walls (37) of the device carrier are also U-shaped, while the upper leg (38), which presents an angle directed towards the inside, is riveted to the section (34) and while the lower leg (39) is riveted to the bottom part (31).

19. Low-voltage switching installation as claimed in any claim 13 through 18, **wherein** the device carrier (29) and the the base carrier (28) are connected by means of a section (40) which is formed at an angle below the device surface (41) and rests completely on the bottom part (31).

20. Low-voltage switching installation as claimed in any claim 17 through 19, **wherein** the height of the lateral walls (37) is equal and independent of the height of the device surface (41).

21. Low-voltage switching installation as claimed in any claim 17 through 20, **wherein** the device surface (41) is at least 30 per cent higher than the lateral walls (37).

22. Low-voltage switching installation as claimed in any claim 17 through 21, **wherein** the device surface (41) is at least twice as high as the lateral walls (37) are, when a switching device with a nominal current of at least 400 A is mounted, the switching device being arranged horizontally in this case.

23. Low-voltage switching installation as claimed in any claim 17 through 22, **wherein** the upper edge (42) is transformed into a bead or into an angle in order to reinforce the device carrier (29).

24. Low-voltage switching installation as claimed in any claim 13 through 23, **wherein** handles (47) or openings (48) are provided either on both sides or at the centre in the front-side area.

25. Low-voltage switching installation as claimed in any of the above claims, **wherein** a borehole (11) or a hole allowing the fixing and earthing/grounding of the plug-in unit (7) by means of a screw in the operating position, while the plug-in unit presents a recess (30) or a hole arranged for this purpose in this case.

26. Low-voltage switching installation as claimed in any of the above claims, **wherein** the bulkhead walls (16) presents means which have the form of recesses and/or webs arranged at the upper and/or lower egdes and allow the arrangement of the bulkhead walls (16) only in a position which is suitable for assembly.

27. Low-voltage switching installation as claimed in claim 26, **wherein** bulkhead walls (16) are provided with recesses (52) and webs (53) which are arranged at their upper and lower edges, have a different width and engage into each other in the area of the cross struts (1) during assembly, while the holes (13) at the cross struts (1) correspond to holes (54) or recesses at the webs (53).

28. Low-voltage switching installation as claimed in claim 27, **wherein** webs are pressed out in parallel or respectively in a Z-shaped way at the upper or lower edges at the bulkhead walls and extend to and rest upon the neighbouring bulkhead wall in such a way that no such additional means for fixing as fixing screws are required.

## Revendications

1. Installation de distribution à basse tension pour la foumiture ou la distribution d'énergie électrique avec appareils de coupure disposés dans les plaques embrochables (7), ou blocs d'appareils de coupure tels que disjoncteur pour coupure en charge, disjoncteur-protecteur, contacteur-disjoncteur ou équipement similaire, présentant un guidage dans l'armoire électrique-, permettant au moins l'embrochement sur les appareils de coupure, du raccord embrochable partant des barres collectrices conductrices; et où sont disposées des entretoises (1, 1′, 1˝) présentant des moyens de guidage pour les plaques embrochables (7), entretoises (1, 1′, 1˝) parallèles à la direction de la plaque embrochable, fixées sur des barres longitudinales (26) et en outre formant un U par des traverses latérales (2, 3) parallèles au plan du sol; **caractérisée en ce que** les moyens de guidage sont raccordés en une seule pièce aux entretoises, ou qu'ils sont réalisés par emboutissage du matériau en une seule pièce, et en ce que la traverse latérale supérieure (2) fait office de glissière de guidage d'une plaque embrochable et que la traverse latérale inférieure (3) est prévue pour le guidage ou la fixation d'un fond intermédiaire (9).

2. Installation de distribution à basse tension selon la revendication 1, **caractérisée en ce que** les entretoises (1, 1′) consistent en un profilé métallique, pièce réalisée à la presse à pliage et en ce que sur une traverse latérale (2,3) au moins, sont emboutis espacés l'un de l'autre plusieurs talons de guidage (5) à gradin ou en forme de Z, prévus pour le guidage de la plaque embrochable (7).

3. Installation de distribution à basse tension selon la revendication 2, **caractérisée en ce que** sur la traverse latérale du dessous (3) du profilé en U sont pareillement disposés des talons de guidage (8) à gradin, appropriés à la réception des fonds intermédiaires (9).

4. Installation de distribution à basse tension selon la revendication 2, **caractérisée en ce que** des percements en fente (21) sont disposés pour la fixation des fonds intermédiaires (9), et en ce que les fonds intermédiaires (9) présentent des embases (50) en forme d'onglets avec une barrette (51) en biseau.

5. Installation de distribution à basse tension selon l'une des revendications 2 à 4, **caractérisée en ce qu**'est réalisée une limitation du déplacement de la plaque embrochable dans la direction des barres collectrices conductrices, au moyen d'une cheville de butée (10) de forme cylindrique.

6. Installation de distribution à basse tension selon l'une des revendications 2 à 5, **caractérisée en ce qu**'entre les talons de guidage (5′) sont disposées des pattes de guidage (22) embouties, permettant le guidage de la plaque embrochable (7), par raccord par affleurement des arêtes de guidage (23) de la plaque embrochable (7) sur le bord des pattes de guidage (22).

7. Installation de distribution à basse tension selon la revendication 1, **caractérisée en ce que** l'entretoise (1˝) est une pièce moulée sous pression, et en ce qu'à l'extrémité d'une traverse latérale (18˝, 19˝) au moins, est formé en une seule pièce un rail de guidage (24) à section en F et présentant une gorge (25), pour le guidage de la plaque embrochable (7).

8. Installation de distribution à basse tension selon la revendication 7, **caractérisée en ce que** sont disposés dans la gorge (25) des étranglements à fin d'atténuation de la friction.

9. Installation de distribution à basse tension selon la revendication 7 ou 8, **caractérisée en ce qu**'est disposée dans la gorge (25) une barrette à fin de limitation de la plaque embrochable (7) par une butée.

10. Installation de distribution à basse tension selon l'une des revendications précédentes, **caractérisée en ce que** sur un de leur côté au moins les entretoises (1, 1′, 1˝) sont prévues afin d'être fixées sur les barres longitudinales (26) par des colliers de fixation (27) en comière.

11. Installation de distribution à basse tension selon l'une des revendications précédentes, **caractérisée en ce que** dans la zone antérieure un appendice de support en forme de U (17) est disposé pour la fixation d'une barre (20) en forme de L ou de U horizontale et parallèle à la paroi arrière ou à la paroi antérieure, la barre élément de base de l'appendice de support (17) étant raccordée par affleurement sur une barre longitudinale; et en ce que l'appendice de support (17) est raccordé en une seule pièce à l'entretoise (1).

12. Installation de distribution à basse tension selon l'une des revendications précédentes, **caractérisée en ce qu**'une barre élément de base (12) des entretoises (1, 1′, 1˝) présente une série de trous (13) alignés pour la fixation des parois séparatrices (16) cloisonnant le compartiment de l'appareil (14) et le local de service d'entrée des raccordements (15).

13. Installation de distribution à basse tension pour la fourniture ou la distribution d'énergie électrique avec appareils de coupure disposés dans les plaques embrochables (7), ou blocs d'appareil de coupure tels que disjoncteur pour coupure en charge, disjoncteur-protecteur, contacteur-disjoncteur ou équipement similaire, présentant un guidage dans l'armoire électrique, permettant au moins l'embrochement sur les appareils de coupure du raccord embrochable partant des barres collectrices conductrices; particulièrement selon l'une des revendications 1 à 12; **caractérisée en ce que** les plaques embrochables disposent d'un élément de fond (31) et d'une arête de guidage (23) située des deux côtés sous le plan du fond , ladite arête de guidage étant disposée parallèlement au plan du fond et raccordée en une seule pièce à l'élément de fond (31); et en ce que sur les bords de l'élément de fond (31) sont formées des cornières (35,36) dirigées vers le bas, les comières des côtés (36) étant achevées par les arêtes de guidage (23); et en ce que la plaque embrochable se compose essentiellement d'un support de base (28) en une seule pièce comportant l'arête de guidage, et d'un support d'appareil (29) disposé verticalement en une seule pièce, pour la fixation de l'appareil de coupure, le côté de fond du support d'appareil (29) formant la surface de l'appareil.

14. Installation de distribution à basse tension selon la revendication 13, **caractérisée en ce que** le support de base (28) consiste en une plaque métallique en forme de L, avec un élément de fond (31) et une paroi arrière (32) à angle droit, formée en une seule pièce et disposée parallèlement à la paroi arrière de l'appareil de coupure.

15. Installation de distribution à basse tension selon la revendication 14, **caractérisée en ce qu**'une cornière (34) pour la fixation du support d'appareil (29) est disposée sur la paroi arrière (32) dans un plan parallèle à celui du sol.

16. Installation de distribution à basse tension selon la revendication 14 ou 15, **caractérisée en ce que** la paroi arrière (32) est prévue avec des évidements (33) pour les dispositifs embrochables adaptés sur les barres conductrices collectrices.

17. Installation de distribution à basse tension selon l'une des revendications 13 à 16, **caractérisée en ce que** le support d'appareil (29) est essentiellement en forme d'U.

18. Installation de distribution à basse tension selon la revendication 17, **caractérisée en ce que** les parois latérales (37) du support d'appareil sont pareillement en forme d'U, permettant le rivetage sur la comière (34) du bord supérieur (38) plié vers l'intérieur et le rivetage du bord inférieur (39) sur l'élément de fond (31).

19. Installation de distribution à basse tension selon l'une des revendications 13 à 18, **caractérisée en ce que** le support d'appareil (29) et le support de base (28) sont raccordés au moyen d'une comière (40) disposée en bas de la surface plane de l'appareil (41) reposant en affleurement sur l'élément de fond (31).

20. Installation de distribution à basse tension selon l'une des revendications 17 à 19, **caractérisée en ce que** les parois latérales (37) sont de hauteurs égales, indépendamment de la hauteur de la surface plane de l'appareil (41).

21. Installation de distribution à basse tension selon l'une des revendications 17 à 20, **caractérisée en ce que** la surface plane de l'appareil (41) est au minimum de 30% plus haute que les parois latérales (37).

22. Installation de distribution à basse tension selon l'une des revendications 17 à 21, **caractérisée en ce que** lors du montage d'un appareil de coupure avec un courant nominal de 400 A au moins, la surface plane de l'appareil (41) soit au minimum deux fois plus haute que les parois latérales (37), l'appareil de coupure étant dans ce cas disposé horizontalement.

23. Installation de distribution à basse tension selon l'une des revendications 17 à 22, **caractérisée en ce que** le bord supérieur (42) est bordelé et bordé à arête vive pour le renforcement du support d'appareil (29).

24. Installation de distribution à basse tension selon l'une des revendications 13 à 23, **caractérisée en ce qu**'au milieu ou sur les côtés de la zone antérieure sont disposées des poignées (47) ou des évidements (48).

25. Installation de distribution à basse tension selon l'une des revendications précédentes, **caractérisée en ce qu**'est disposé un alésage ou un trou pour la fixation et mise à la terre au moyen d'une vis de la plaque embrochable (7) en position marche, ladite plaque embrochable présentant une encoche (30) ou un trou à cette fin.

26. Installation de distribution à basse tension selon l'une des revendications précédentes, **caractérisée en ce que** des cloisons séparatrices (16) présentent sur le bord supérieur et/ou sur le bord inférieur des moyens en forme d'encoches et/ou de tenons, permettant le positionnement des cloisons séparatrices (16) seulement en position de montage.

27. Installation de distribution à basse tension selon la revendication 26, **caractérisée en ce que** les cloisons séparatrices (16) comportent sur le bord supérieur et sur le bord inférieur des encoches (52) et des tenons (53) de largeur variable et s'engageant les uns dans les autres lors du montage dans la zone des entretoises (1), permettant à des trous (13) sur les entretoises (1) de correspondre à des trous (54) ou des encoches sur les tenons (53).

28. Installation de distribution à basse tension selon la revendication 27, **caractérisée en ce que** les tenons sont emboutis sur les bords supérieur et inférieur parallèlement ou en forme de Z, en s'engageant et s'appuyant sur la cloison séparatrice voisine de telle manière que des moyens supplémentaires de fixation, ou des vis de fixation, deviennent inutiles.
